(19) Europäisches Patentamt

European Patent Office

Office européen des brevets

(11) Veröffentlichungsnummer: **0 451 557 A1**

# (12) EUROPÄISCHE PATENTANMELDUNG

(21) Anmeldenummer: **91104274.5**

(22) Anmeldetag: **20.03.91**

(51) Int. Cl.⁵: **C08F 255/02,** //(C08F255/02, 220:10)

(30) Priorität: **02.04.90 DD 339282**

(43) Veröffentlichungstag der Anmeldung: **16.10.91 Patentblatt 91/42**

(84) Benannte Vertragsstaaten: **CH DE ES FR IT LI**

(71) Anmelder: **LEUNA-WERKE AG Thälmann-Platz O-4220 Leuna 3(DE)**

(72) Erfinder: **Gaikowski, Manfred, Dr. Karl-Marx-Strasse 22 O-4800 Naumburg(DE)**
Erfinder: **Bernhardt, Margot, Dr. Block 643/Haus 6 O-4090 Halle-Neustadt(DE)**
Erfinder: **Seiffarth, Klaus, Dr. Block 032/6 O-4090 Halle-Neustadt(DE)**
Erfinder: **Bühler, Konrad, Dr. August-Bebel-Strasse 4 O-7030 Leipzig(DE)**
Erfinder: **Baumann, Hans-Joachim, Dr. Block 916/1 O-4090 Halle-Neustadt(DE)**

(54) **Verfahren zur Herstellung eines UV-Stabilisators für Polyolefine.**

㉗ Ziel ist die Herstellung einer Polymer/Stabilisator-Kombination, die eingearbeitet in Polyolefine eine hohe UV-Stabilisierung bewirkt, sich durch gute Polymerverträglichkeit und geringen Auswascheffekt auszeichnet und wirtschaftlich herstellbar ist. Erfindungsgemäß werden 100 Masseteile eines wachsartigen bis hochmolekularen Polyolfins, vorzugsweise Polyethylens oder EVA-Copolymers, mit 0,5 bis 100 Masseteilen Acryl- oder Methacrylsäure-2,2',6,6'-tetramethylpiperidylester in der Schmelze homogenisiert und anschließend in Gegenwart von 0,05 bis 0,5 Masseanteilen in % eines Radikale bildenden Initiators bei 100 bis 200 °C einer Pfropfreaktion unterworfen.

EP 0 451 557 A1

Die Erfindung betrifft ein Verfahren zur Herstellung eines UV-Stabilisators für Polyolefine. Solche stabilisierten Polymeren werden vorrangig für Landwirtschaftsfolien und Oberflächenüberzüge verwendet.

Die Einsatzdauer eines Polymeren wird unter anderem von seiner Stabilität gegenüber UV-Strahlen bestimmt. Speziell bei Polyolefinen spielt die UV-Beständigkeit eine große Rolle.

Es ist bekannt, daß man durch Einarbeiten von sterisch gehinderten Aminen vom Typ des 4-Hydroxy- bzw. 4-Amino-2,2',6,6' -tetramethylpiperidins in das Polymere die UV-Beständigkeit wesentlich erhöhen kann. Nachteilig bei diesen niedermolekularen Verbindungen sind ihre hohe Flüchtigkeit und ihre gute Wasserlöslichkeit.

Es wurde daher vorgeschlagen, das Molekulargewicht der sterisch gehinderten Piperidine durch eine chemische Kopplungsreaktion zu erhöhen. Auf diese Weise erhält man Produkte mit niedrigem Dampfdruck und geringer Wasserlöslichkeit.

So ist bekannt, daß man das 4-Amino-2,2',6,6'-tetramethylpiperidin und das 4-Hydroxy-2,2',6,6'-tetramethylpiperidin mit Acrylsäure- bzw. Methacrylsäureester zu den entsprechenden Amiden bzw. Estern des Piperidins umsetzen kann. (F.E. Karrer Makrom. Chem. 181 (1980) 595-633)

Bekannt ist auch, daß man den Acrylsäure-2,2',6,6'-tetramethylpiperidylester homo- und copolymerisieren kann (USP 4 294 949), wobei als Comonomere Styren, Acrylnitril, Acrylsäureester, Ethylen und Vinylacetat vorgeschlagen werden

Nachteilig bei vielen dieser Copolymeren ist, daß sie auf Grund ihres polaren Charakters eine begrenzte Verträglichkeit mit Polyolefinen besitzen, wodurch ihre Wirksamkeit entscheidend gesenkt wird.

Besonders gute UV-Stabilisatoren für Polyolefine lassen sich mit polymeren Lichtschutzstoffen erzielen, die eine möglichst unpolare Trägerkette aufweisen.

Solche Produkte sind zugänglich durch eine Umesterung von Ethylen/Acrylsäureester-Copolymeren mit 4-Hydroxy-2,2',6,6'-tetramethylpiperidin (EP 0063544).

Ähnlich aufgebaute polymere Lichtschutzstoffe werden erhalten durch Copolymerisation von Ethylen mit Acrylsäure-2,2',6,6'-tetramethylpiperidylester (USP 4 294 949).

In dem JP 63-101 455 wird vorgeschlagen, auf das Polyolefin Maleinsäureanhydrid zu pfropfen und das so erhaltene Pfropfprodukt mit 4-Hydroxy- bzw. 4-Amino-2,2',6,6'-tetramethylpiperidin umzusetzen. Der Nachteil der bekannten Verfahren zur Herstellung von UV-Stabilisatoren mit polyethylenähnlicher Trägerkette besteht in der geringen Wirtschaftlichkeit der Verfahren. Bei der Umesterungsvariante sind sehr viele Verfahrensschritte erforderlich, die einer technischen Realisierung im Wege stehen. Ähnliches gilt für die Variante mit der Aufpfropfung von Maleinsäureanhydrid auf das Polymere.

Bei der Copolymerisation des Acrylsäure-2,2',6,6' -tetramethylpiperidylesters mit Ethylen ist ein hoher Investitionsaufwand für eine Hochdruckanlage erforderlich, die für eine kleintonnagige Produktion zu teuer wird.

Das Ziel der Erfindung besteht darin, eine Polymer-Stabilisator-Kombination herzustellen, die eingearbeitet in Polyolefine eine hohe UV-Stabilisierung bewirkt, sich durch eine gute Polymerverträglichkeit und einen geringen Auswascheffekt auszeichnet und wirtschaftlich herstellbar ist. Die Herstellung soll ohne größeren Investaufwand realisierbar sein. Der Erfindung liegt somit das Problem zugrunde, mit möglichst wenigen Verfahrensschritten und unter Umgehung von aufwendiger Hochdrucktechnik ein sterisch gehindertes Amin so an einer Polymerkette zu fixieren, daß ein qualitativ hochwertiger UV-Stabilisator für Polyolefine entsteht. Das Problem wird dadurch gelöst, daß man erfindungsgemäß 100 Masseteile eines wachsartigen bis hochmolekularen Polyolefins mit 0,5 bis 100 Masseteilen Acryl- oder Methacrylsäure-2,2',6,6' - tetramethylpiperidylester in der Schmelze homogenisiert und anschließend in Gegenwart von 0,05 bis 0,5 Masseanteilen in % eines Radikale bildenden Initiators bei 100 bis 200 °C einer Pfropfreaktion unterwirft.

Die wachsartigen bis hochmolekularen Polyolefine sind vorzugsweise Polyethylen oder Ethylen-Vinylacetat-Copolymere. Vorteilhafterweise werden von dem Acryl- oder Methacrylsäure-2,2',6,6'-tetramethylpiperidylester 10 bis 30 Masseteile eingesetzt.

Die Umsetzung der wachsartigen niedermolekularen Polymeren, deren Molekulargewicht im Bereich von etwa 1500 bis 10 000 liegt, mit dem Piperidylacrylat kann in einem Rührwerk erfolgen während die Umsetzung von hochmolekularen Polymeren mit einem Molekulargewicht über 20 000 in einem Extruder oder Kneter am zweckmäßigsten ist.

Als Radikale bildende Initiatoren eignen sich die handelsüblichen Polymerisationsinitiatoren. Die Wahl des Initiators richtet sich dabei nach seiner Halbwertszeit bei der entsprechenden Umsetzungstemperatur.

Das erfindungsgemäß hergestellte Pfropfpolymere wird in Mengen von 0,1 bis 1 Masseanteil in %, vorzugsweise 0,2 bis 0,4 Masseanteilen in %, in das zu stabilisierende Polyolefin eingearbeitet.

Nachstehend wird die Erfindung durch einige Beispiele näher erläutert, ohne sie dadurch einzuschränken.

Beispiel 1

2

In einem 2 1-Rührgefäß mit Argonspülung und Vakuumentgasung werden 700 g Polyethylenwachs (Mn 1840; Mw 7240) unter Argonspülung aufgeschmolzen und mit 300 g Acrylsäure-2,2',6,6'-tetramethylpiperidylester versetzt. Unter Rühren werden bei 120 °C 4 g tert.-Butylperbenzoat zugesetzt und die Temperatur innerhalb von 30 Minuten auf 165 °C gesteigert. Danach wird die Probe eine halbe Stunde bei 130 bis 670 Pa und 165 °C entgast.

| | |
|---|---|
| Gehalt an Piperidingruppen | 1,41 mol/kg |
| Mn | 1280 g/mol |
| Mw | 5020 g/mol |

Beispiel 2

Das Beispiel 2 wurde analog dem Beispiel 1 durchgeführt. Es wurden 800 g Polyethylenwachs und 200 g Acrylsäure-2,2',6,6'-tetramethylpiperidylester eingesetzt.

| | |
|---|---|
| Gehalt an Piperidingruppen | 0,92 mol/kg |
| Mn | 1500 g/mol |
| Mw | 7710 g/mol |

Beispiel 3

Das Beispiel 3 wurde analog dem Beispiel 1 durchgeführt. Es wurden 900 g Polyethylenwachs und 100 g Acrylsäure-2,2',6,6'-tetramethylpiperidylester eingesetzt.

| | |
|---|---|
| Gehalt an Piperidingruppen | 0,46 mol/kg |
| Mn | 1530 g/mol |
| Mw | 10200 g/mol |

Beispiel 4

Das Beispiel 4 wurde analog dem Beispiel 1 durchgeführt. Anstelle des Polyethylenwachses wurde ein Ethylen/Vinylacetat-Copolymeres mit 25,5 Masseanteilen in % Vinylacetat eingesetzt. (Mn 2750: Mw 7400)

| | |
|---|---|
| Gehalt an Piperidingruppen | 1,41 mol/kg |
| Mn | 2430 g/mol |
| Mw | 6850 g/mol |

Beispiel 5

32 g Polyethylen (Mn 21500; Mw 27700) wurden unter Argonspülung in einer Knetkammer bei 180 °C aufgeschmolzen und mit 8 g Acrylsäure-2,2',6,6'-tetramethylpiperidylester und 150 mg tert.-Butylperbenzoat versetzt und 5 Minuten bei 180 °C geknetet.

```
Gehalt an Piperidingruppen        0,92 mol/kg
Mn                                17900 g/mol
Mw                                79600 g/mol
```

Beispiel 6

Das Beispiel 6 wurde analog dem Beispiel 5 durchgeführt. Es wurden 28 g Polyethylen und 12 g Acrylsäure-2,2',6,6' -tetramethylpiperidylester eingesetzt.

```
Gehalt an Piperidingruppen        1,41 mol/kg
Mn                                17900 g/mol
Mw                                65200 g/mol
```

Beispiel 7

Das Beispiel 7 wurde analog dem Beispiel 5 durchgeführt. Anstelle des Polyethylens wurde ein Ethylen/Vinylacetat-Copolymerisat mit 24,5 Masseanteilen in % Vinylacetat (Mn 15200; Mw 51700) eingesetzt.

```
Gehalt an Piperidingruppen        0,92 mol/kg
Mn                                23800 g/mol
```

Beispiel 8

Ausprüfung der Muster aus den Beispielen 1 bis 7

1. Einarbeitung in Polyethylen

Jeweils 40 g Polyethylen wurden unter Argonspülung bei 180 °C in einer Knetkammer aufgeschmolzen und mit 0,15 bzw. 0,3 Masseanteilen in % des in den Beispielen 1 bis 7 hergestellten Pfropfproduktes versetzt und 20 Minuten geknetet. Unter gleichen Bedingungen wurde ein Blindversuch durchgeführt.
Zum Vergleich wurde ein handelsüblicher Stabilisator vom Typ des Poly(2,2',6,6'-tetramethylpiperidin-1,4-diyloxysuccinyloxyethylen) in einer Konzentration von 0,15 bis 0,3 Masseanteilen in % eingearbeitet.

2. Herstellung der Prüffolien

Die mit Stabilisator versetzten Proben wurden zu Folien mit einer Stärke von 0,05 mm gepreßt.

3. Ausprüfung

Die Ausprüfung der Folien hinsichtlich UV-Stabilität erfolgte in einem "Xenotest 450" mit Beregnung. Die Proben galten als abgebaut, wenn die CO-Bande bei 1815 cm$^{-1}$ eine Extinktion von 0,1 erreicht hatte.

4. Ausprüfungsergebnisse

| Stabilisator nach Beispiel | Eingesetzte Stabilisator- menge (Masseanteile in %) | Wirkgruppen- gehalt (mmol/kg PE) | Wirk- faktor |
|---|---|---|---|
| Blindprobe | 0 | 0 | 1 |
| 1 | 0,15 | 2,13 | 4,2 |
|   | 0.30 | 4,27 | 6,5 |
| 2 | 0,15 | 1,42 | 4,0 |
|   | 0,30 | 2,84 | 5,3 |
| 3 | 0,15 | 0,71 | 3,0 |
|   | 0,30 | 1,42 | 4,2 |
| 4 | 0,15 | 2,13 | 4,3 |
|   | 0,30 | 4,27 | 6,6 |
| 5 | 0,15 | 1,42 | 3,8 |
|   | 0,30 | 2,84 | 5,1 |
| 6 | 0,15 | 2,13 | 4,7 |
|   | 0,30 | 4,27 | 6,4 |
| 7 | 0,15 | 1,42 | 4,3 |
|   | 0,30 | 2,84 | 5,4 |
| Vergleichs- probe | 0,15 | 5,8 | 3,4 |
|   | 0,30 | 11,6 | 5,1 |

$$Wirkfaktor = \frac{Abbauzeit\ der\ stabilisierten\ Probe\ (h)}{Abbauzeit\ der\ unstabilisierten\ Probe\ (h)}$$

**Patentansprüche**

1. Verfahren zur Herstellung eines UV-Stabilisators für Polyolefine durch Fixierung eines sterisch gehinderten Amins an einer Polymerkette, dadurch gekennzeichnet, daß man 100 Masseteile eines wachsartigen bis hochmolekularen Polyolefins mit 0,5 bis 100 Masseteilen Acryl- oder Methacrylsäure-2,2',6,6'-tetramethylpiperidylester in der Schmelze homogenisiert und anschließend in Gegenwart von 0,05 bis 0,5 Masseanteilen in % eines Radikale bildenden Initiators bei 100 bis 200 °C einer Pfropfreaktion

unterwirft.

2. Verfahren nach Anspruch 1, dadurch gekennzeichnet, daß als wachsartige bis hochmolekulare Polyolefine Polyethylen oder Ethylen-Vinylacetat-Copolymere eingesetzt werden.

3. Verfahren nach Anspruch 1 und 2, dadurch gekennzeichnet, daß 1∅ bis 3∅ Masseteile Acryl- oder Methacrylsäure-2,2',6,6'-tetramethylpiperidylester eingesetzt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 285 293 (G. SCOTT et al.) <br> * Ansprüche 1-15; Beispiele 27-28,33; Seite 5, Zeilen 35-40 * <br> – – – | 1-3 | C 08 F 255/02 // <br> (C 08 F 255/02 <br> C 08 F 220:10 ) |
| D,A | EP-A-0 063 544 (CIBA-GEIGY AB) <br> * Ansprüche 1-9,11-15; Beispiele * <br> – – – – – | 1-3 | |
| | | | **RECHERCHIERTE SACHGEBIETE (Int. Cl.5)** |
| | | | C 08 F |
| | Der vorliegende Recherchenbericht wurde für alle Patentansprüche erstellt | | |

| Recherchenort | Abschlußdatum der Recherche | Prüfer |
|---|---|---|
| Den Haag | 18 Juli 91 | PERSSON E.K.C. |